# EUROPÄISCHE PATENTSCHRIFT

(11) **EP 0 581 401 B1**
(45) Veröffentlichungstag und Bekanntmachung des Hinweises auf die Patenterteilung: **06.12.1995**
(21) Anmeldenummer: 93250207.3
(22) Anmeldetag: 14.07.1993
(51) Int. Cl.: B29C 45/07, B29C 45/17

(54) **Spritzgiessmaschine**
Injection moulding machine
Machine à mouler par injection

(30) Priorität: 17.07.1992 DE 4224195
(43) Veröffentlichungstag der Anmeldung: 02.02.1994
(73) Patentinhaber: MANNESMANN Aktiengesellschaft, 40027 Düsseldorf (DE)
(72) Erfinder: Würl, Ernst, D-91798 Höttingen (DE); Schreiner, Helmut, Dipl.-Ing., D-90411 Nürnberg (DE)
(74) Vertreter: Meissner, Peter E., Dipl.-Ing.

(56) Entgegenhaltungen:
- DE-A- 1 554 768
- DE-B- 1 124 233
- FR-A- 2 450 156

## Beschreibung

Die Erfindung betrifft eine Spritzgießmaschine, bei der eine über eine Aufnahme auf einen Grundrahmen gelagerte einen Antrieb aufweisende Schneckeneinheit mit einer Werkzeugaufspannplatte kraftschlüssig in Verbindung bringbar ist.

Eine Maschine dieser Bauart ist beispielsweise aus der DE-PS 32 49 092 bekannt. Die Spritzgießmaschine weist dabei eine Spritzeinheit auf, die in einem Heizzylinder eine Schnecke enthält und die von einem auf dem Maschinenbett vorgesehenen Gehäuse gehalten wird. Durch eine axiale Vor- oder Rückwärtsbewegung der Spritzeinheit wird diese gegen das Werkzeug angedrückt oder von ihm wegbewegt.

Verfahrenstechnisch kommen unterschiedliche Plastifizierzylinderlängen und Durchmesser zum Einsatz. Bei der bekannten Maschine werden unterschiedliche Plastifizierzylinderlängen durch entsprechenden vergrößerten Verschiebehub kompensiert. In nachteiliger Weise kommt es hier zum Mehraufwand bei großen Längendifferenzen der Plastifizierzylinder. Darüber hinaus wird die Einbaumöglichkeit von Plastifizierzylindern außerhalb geplanter Längen begrenzt.

Bei Plastifizierzylindern großer Länge kann es erforderlich sein, den vorderen Teil der Schnecke abzustützen. Ein solches Beispiel ist aus der Schrift DE-OS 40 04 470 bekannt, bei dem die Plastifiziereinheit sich nicht nur im Getriebegehäuse, sondern auch auf einer Gabel abstützt. Gabel und Gehäuse ruhen auf einem gemeinsamen Untersatz, der durch einen Fahrantrieb bis zur Anlage an das Werkzeug oder von diesem weg auf Gleitführungen verfahren wird. Konzeptionell besteht zur oben genannten Schrift kein Unterschied, so daß die gleichen Nachteile vorhanden sind. Aus der US 31 69 275 ist eine Spritzgießmaschine bekannt, bei der der mündungsseitige Teil des Gehäuses der Plasitifiziereinheit auf einem schlittenartigen Bock (Pedestal) ruht und deren fußendiger Gehäuseteil mit einem weiteren, über einen Motor antreibbaren Bock in Verbindung stehen. Das Gehäuse der Plastifiziereinheit ist durch koaxial angeordnete Zylinder in seiner Länge veränderbar, wobei beim Einspritzvorgang die Schnecke axial gehalten wird und die Kunststoffmasse durch ineinanderfahren der Plastifiziereinheit einem Extruder gleich aus diesem herausgedrückt wird. Hierzu wirkt im Kopfbereich der Plastifiziereinheit ein Rahmen aus der Elementen Querhaupt, Kopfflansch und Verbindungsstangen gebildet, der diese Längenänderung mittels Hydraulikeinheiten ermöglicht. Dieser Längerländerung sind enge Grenzen gesetzt und eng an die Funktion des Einspritzens gebunden. Die für die Anpressung der Plastifiziereinheit an die Werkzeugaufspannplatte werden im wesentlichen über die Verbindungsstangen von einem weit von der Werkzeugaufspannplatte angeordneten Antrieben durchgeführt.

Der aus dieser Schrift bekannte Gegenstand ist nicht in der Lage, mit einfachen konstruktiven Mitteln bei hoher Führungsgenauigkeit und der Möglichkeit der Einleitung großer Antriebskräfte, Plastifiziereinheiten mit deutlichem Unterschied in ihrem Durchmesser und in ihrer Länge umrüstungsfrei einzusetzen.

Der aus dieser Schrift bekannte Gegenstand besitzt keinen Schlitten, der von einer an der Werkzeugaufspannplatte befestigten Bewegungseinheit auf kürzestem Wege kopfseitig gegriffen und an die Werkzeugplatte angepreßt wird. Weiterhin sind keine Elemente vorhanden, die ein formschlüssiges Einlegen des mündungsseitigen Gehäuseteils in den Kopfbereich des Schlittens ermöglichen, um damit ein einfaches Ändern des Angriffpunktes der in sich eine fixe Länge aufweisenden Gehäuse der Plastifizierzylinder erlauben.

Weiterhin werden keine Mittel vorgeschlagen, Plastifiziergehäuse unterschiedlicher Länge und unterschiedlicher Durchmesser mit einer auf dem Grundrahmen verschiebbaren Lafette verbinden.

Aus (2) der DE-A-15 54 768 ist eine Spritzgießmaschine für Kunststoffe bekannt, die um einen Drehpunkt schwenkbar ist und deren kopfseitiger Gehäuseteil durch eine Schraubverbindung gegen einen Einsatz der Werkzeugaufspannplatte gepreßt wird.

Dieser Schrift ist kein Schlitten entnehmbar, der in einfacher Weise ein formschlüssiges Befestigen des mündungsseitigen Gehäuseteils ermöglicht. Weiterhin sind keinerlei Elemente erkennbar, die ein Umrüsten von Plastifiziereinheiten auch bei deutlichem Unterschied in ihren Durchmessern und in ihrer Länge weitgehendst vermeiden.

Die Erfindung hat sich das Ziel gesetzt, eine Spritzgießmaschine genannter Gattung zu schaffen, bei der mit einfachen konstruktiven Mittein bei hoher Führungsgenauigkeit und der Möglichkeit der Einleitung großer Anpreßkräfte Plastifiziereinheiten mit deutlichem Unterschied in ihrem Durchmesser und ihrer Länge umrüstungsfrei einzusetzen.

Die Erfindung erreicht dieses Ziel durch die kennzeichnenden Merkmale des Hauptanspruchs.

Erfindungsgemäß wird ein antreibarer Schlitten vorgeschlagen, der mit dem mündungsseitigen Gehäuseteil der Plassifiziereinheit verbindbar ist und über das Gehäuse mit einer Lafette in Verbindung steht, auf der im wesentlichen der Schneckenantrieb angeordnet ist.

Durch die Verwendung von einem Schlitten und einer Lafette als zweite Lagerung wird eine sichere Abstützung der Plastifiziereinheit erreicht.

Durch die Anordnung des angetriebenen Schlittens in der Nähe der Gehäusemündung der Plastifiziereinheit ist das sichere Einleiten auch von hohen Anpreßkräften der Schneckendüse an die Werkzeugaufspannplatte möglich. Durch die Aufteilung der Aufnahme der Plastifiziereinheit in einen Schlitten und eine davon unabhängige Lafette können Plastifiziereinheiten in beliebiger Baugröße eingesetzt werden. Durch an die einzelnen Gehäuse angepaßte Aufnahmeelemente im kopfbereich des Schlittens sind gleiche Hubbedingungen für den Hub zur Werkzeugaufspannplatte festgelegt. Die vom Schlitten unabhängige Lafette kann somit in Abhängigkeit der Plastifizierzylinderlänge frei bewegt werden. Zum Ausgleich verschiedener Durchmesser der Plastiliziereinheiten kommen zusätzlich Adapter zum Einsatz, die bei konstanter Schneckenmittenachse bei Bedarf auswechselbar sind. Durch eine mittels eines Stellantriebes betätigbare Spreizvorrichtung läßt sich die Arretierung der Plastifiziereinheit automatisieren. Minimaler konstruktiver Aufwand ist dazu erforderlich, wenn an die für das Verfahren der Lafette eingesetzten Kolben-Zylindereinheit in Reihe eine weitere kolben-Zylindereinheit eingesetzt wird, mit der der Schlitten bewegt werden kann. Während des Betriebszustandes stützt sich diese kolbenzylindereinheit kraftmässig auf der Lafette ab und bewegt den Schlitten und damit das Halteelement gegen einen Flansch der Plastifiziereinheit. Die Plastifiziereinheit ist somit mit ihrem Joch in der Lafette und mit dem Flansch vom Schlitten durch eine Spreizeinheit, beispielsweise eine Kolben-Zylindereinheit geklemmt.

Durch die Einleitung der Anpreßkrätte der Gehäusemundung an das Werkzeug treten kaum temperaturbedingte Längenanderungen und somit Änderungen der Anpreßkraft auf. Die thermischen Längenänderungen im übrigen Teil des Gehäuses der Plastifiziereinheit können sich frei entfalten. In besonders vorteilhafter Weise ist die fußendig angeschlossene Lafette auf Gleitsteinen gelagert, um eine besonders behinderungsfreie horizontale Bewegung zu ermöglichen.

Durch die nahezu beliebige Benutzungsmöglichkeit verschiedener Längen entsprechend der Plastifiziereinheiten und/oder Durchmesser der Schnecken auch bei der Verwendung bereits in nur einer Maschinengröße erlaubt den kunststoftproduzenten den Einsatz von an die jeweilige Plasifizierleistung angepaßten Plastifiziereinheiten. Die erforderliche Schneckendurchmesserreihe ist nur in einer Ausführung für alle vorgesehenen Maschinengrößen notwendig, weil durch den flexiblen Aufnahmeabstand für die Plastifiziereinheiten die Längenanpassung erfolgt, die Anpassung der Aufnahmedurchmesser durch Halte- und Zentrierelemente gewährleistet wird. Darüber hinaus lassen sich die Plastifiziereinheiten einfacher normen und die Anzahl der in Reserve zu haltenden Bauteile wird verringert. Da weder im Durchmesser noch in der Länge maschinenseitig eine Begrenzung steht, können Plastifiziereinheiten eingesetzt werden, die eine konstante Plastifizierleistung aufweisen, die sich vereinfacht aus dem Verhältnis der Schneckenlänge zu ihrem Durchmesser ermitteln läßt.

Ein Beispiel der Erfindung ist in der Zeichnung dargelegt.
Es zeigen:
- Figur 1: eine Spritzgießmaschine mit über Halte- und Fixierelemente gelagerte Plastifiziereinheit
- Figur 2: für eine Spreizeinrichtung gehalterte Plastifiziereinheit.

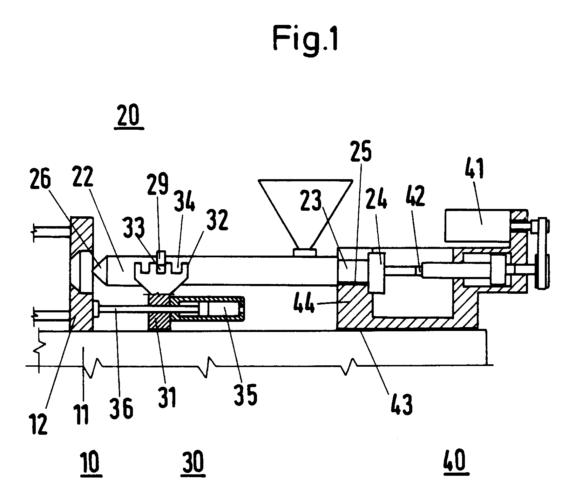

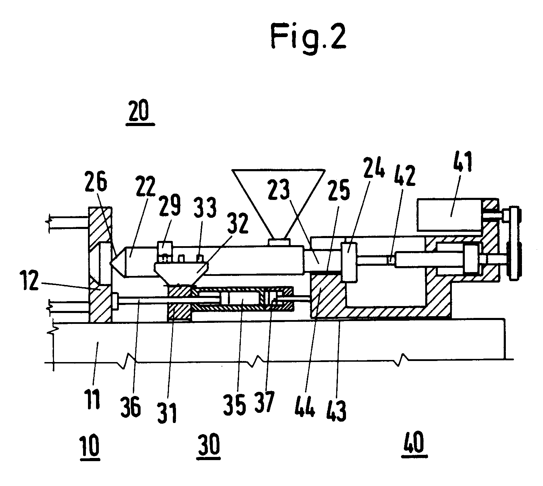

Die Figuren 1 und 2 zeigen dabei von den fixierten Bauteilen 10 der Spritzgießmaschine den Grundrahmen 11 und die Werkzeugaufspannplatte 12.

Auf dem Grundrahmen 11 die als Schlitten 31 ausgebildete Aufnahme 30 und die Lafette 40 horizontal bewegbar. Am kopfendigen Schlittenteil 32 sind Aufnahmeelemente 33 zur Aufnahme einer Plastifiziereinheit 20 vorgesehen. Im dargelegten Beispiel sind Ausnehmungen 34 vorgesehen.

Am Schlitten ist eine Kolben-Zylinder-Einheit 35 angeordnet, deren Kolbenstange 35 an der Aufspannplatte 12 befestigt ist und den Schlitten 31 und damit die Plastifiziereinheit 20 zur Aufspannplatte 12 hin- bzw. wegbewegt.

Von der Plastifiziereinheit 20 ist das Gehäuse 21 dargestellt, an dessen mündungsseitigen Gehäuseteil 22 ein Joch 29 angebracht ist. Dieses Joch 29 ist formschlüssig mit Ausnehmungen 34 der Aufnahme 30 verbindbar. Bei Betrieb der Plastifiziereinheit wird die Gehäusemündung 25 gegen die Aufspannplatte 12 gepreßt.

Am fußendigen Gehäuseteil 23 sind Halte- und Zentrierelemente 24 vorgesehen, mit denen das Gehäuse 21 der Plastifiziereinheit 20 mit der Lafette 40 verbindbar sind.

Die Lafette ist in der Weise ausgestaltet, daß sie den Schneckenantrieb 41 aufnehmen kann. Zwischen dem Schneckenantrieb 41 und der Plastifiziereinheit 20 ist eine Kupplung 42 zum Entkuppeln beider Bauteile angeordnet.

Die Lafette 40 weist darüber hinaus Gleitelemente 43 auf, die ein behinderungsfreies Gleiten und Führen der Latette 40 auf dem Grundrahmen 11 in horizontaler Richtung ermöglicht.

In der Figur 2 wird die Plastifiziereinheit durch eine Spreizvorrichtung gehalten. Die Spreizvorrichtung setzt sich dabei zusammen aus dem Spannelement 37, das hier als Kolben-Zylinder-Einheit ausgeführt ist und sich zur Vereinfachung der Konstruktion der zu verfahrende Schlitten 31 vorgesehenen Kolben-Zylinder 35 abstützt und andererseits an dem als Kabel 44 ausgebildeten Teil der Lafette 40 befestigt ist. Die Gabel 44 lehnt sich mit der der Aufspannplatte 12 gegen ein als Flansch ausgebildetes Halteelement 24.

Die Aufnahmeelemente 33 des Schlittens 31 sind im vorliegenden Fall in Form von Bolzen ausgebildet, die mit Ausnehmungen des Jochs 29 korrespondieren.

### Positionsliste

- 10: Fixierte Bauteile
- 11: Grundrahmen
- 12: Aufspannplatte
- 20: Plastifiziereinheit
- 21: Gehäuse
- 22: Mündungsseitiges Gehäuseteil
- 23: Fußseitiges Gehäuseteil
- 24: Halteelemente
- 25: Zentrierelemente
- 26: Gehäusemündung
- 29: Joch
- 30: Einspannung
- 31: Schlitten
- 32: Kopfendiger Schlittenteil
- 33: Aufnahmeelemente
- 34: Ausnehmungen
- 35: Kolben-Zylinder-Einheit
- 36: Kolbenstange
- 37: Spreizmittel
- 40: Lafette
- 41: Schneckenantrieb
- 42: Kupplung
- 43: Gleitelemente
- 44: Gabel

## Patentansprüche

1. Spritzgießmaschine, bei der eine über eine Aufnahme auf einem Grundrahmen gelagerte, einen Antrieb aufweisende Plastifiziereinheit mit einer Werkzeugaufspannplatte kraftschlüssig in Verbindung bringbar ist, wobei der mündungsseitige Gehäuseteil der Plastifiziereinheit von einem auf dem Grundrahmen ruhenden Schlitten auf eine Werkzeugaufspannplatte zu und von ihr wegbewegbar ist,
dadurch gekennzeichnet,
daß der Schlitten (31) durch mindestens eine an der Werkzeugaufspannplatte (12) befestigten Bewegungseinheit (35) auf dem Grundrahmen (11) bewegbar ist,
daß am kopfendigen Schlittenteil (32) mindestens eine Ausnehmung (34) vorgesehen ist,
daß in diese Ausnehmung (34) ein am mündungsseitigen Gehäuseteil (22) vorgesehenes Joch (29) formschlüssig einlegbar ist, und
daß der fußseitige Gehäuseteil (23) der Plastifiziereinheit (20) über Halte- und Zentrierelemente (24, 25) mit einer auf dem Grundrahmen (11) verschiebbaren Lafette (40) verbindbar ist.

2. Spritzgießmaschine nach Anspruch 1,
dadurch gekennzeichnet,
dan die an der Werkzeugaufspannplatte (12) befestigte Bewegungseinheit eine Kolben-Zylinder-Einheit (35) ist, deren Kolbenstange (36) durch den Schlitten geführt ist.

3. Spritzgießmaschine nach Anspruch 1,
dadurch gekennzeichnet,
daß die jeweilige Ausnehmung (34) in ihrer Lage mit einem vorbestimmten Abstand des Jochs (29) zur Gehäusewindung (26) der Plastifiziereinheit (20) korrespondiert.

4. Spritzgießmaschine nach Anspruch 1,
**dadurch gekennzeichnet, daß**
die Halte- und Zentrierelemente (24,25) in Länge und Durchmesser eine Form aufweisen, die verschiedene Außendurchmesser des Gehäuses (21) ausgleichend den fußendigen Gehäuseteil (23) mit der Lafette (40) lösbar verbinden.

5. Spritzgießmaschine nach Anspruch 4,
**dadurch gekennzeichnet, daß**
die Lafette (40) über Gleitelemente (43) auf den Grundrahmen (12) kraftarm horizontal verschiebbar ist.

6. Spritzgießmaschine nach Anspruch 1,
**dadurch gekennzeichnet, daß**
die Lafette (40) Bauteile zur Aufnahme des mit der Plastifiziereinheit (20) verbindbaren Schneckenantriebes (41) aufweist.

7. Spritzgießmaschine nach Anspruch 4,
**dadurch gekennzeichnet, daß**
die Halteelemente 24 aus einem am fußseitigen Ende der Plastifiziereinheit angeordneten Flansch besteht, der durch Spreizmittel (37) kraftschlüssig mit dem Joch (29) der Plastifiziereinheit (20) in Verbindung gebracht wird.

8. Spritzgießmaschine nach Anspruch 7,
**dadurch gekennzeichnet, daß**
die Spreizmittel (37) aus einem Linearantrieb, z. B. einer Kolben-Zylinder-Einheit bestehen.

## Claims

1. An injection-moulding machine, in which a plasticising unit which is mounted via a holding fixture on a base frame and bears a drive can be connected non-positively to a tool clamping plate, with the mouth-end housing part of the plasticising unit being movable towards and away from a tool clamping plate by means of a slide resting on the base frame, characterised in that
the slide (31) is moveable on the base frame (1) by means of at least one movement unit (35) attached to the tool clamping plate (12),
that at least one recess (34) is provided on the head-end slide part (32),
that a yoke (29) provided on the mouth-end housing section (22) can be inserted positively into this recess (34), and
that the foot-end housing part (23) of the plasticising unit (20) can be connected via holding and centring elements (24, 25) to a mounting (40) which is displaceable on the base frame (11).

2. An injection-moulding machine according to Claim 1, characterised in that the movement unit attached to the tool clamping plate (12) is a piston-cylinder unit (35), the piston rod (36) of which is passed through the slide.

3. An injection-moulding machine according to Claim 1, characterised in that the respective recess (34) corresponds in its position with a predetermined distance of the yoke (29) from the housing mouth (26) of the plasticising unit (20).

4. An injection-moulding machine according to Claim 1, characterised in that the holding and centring elements (24, 25) in length and diameter have shapes which, compensating for different external diameters of the housing (21), detachably connects the foot-end housing part (23) to the mounting (40).

5. An injection-moulding machine according to Claim 4, characterised in that the mounting (40) is horizontally displaceable with low force on the base frame (12) via sliding elements (43).

6. An injection-moulding machine according to Claim 1, characterised in that the mounting (40) has components for receiving the worm drive (41) which can be connected to the plasticising unit (20).

7. An injection-moulding machine according to Claim 4, characterised in that the holding elements (24) consist of a flange located at the foot end of the plasticising unit, which flange is connected non-positively to the yoke (29) of the plasticising unit (20) by spreading means (37).

8. An injection-moulding machine according to Claim 7, characterized in that the spreading means (37) consist of a linear drive, e.g. a piston-cylinder unit.

## Revendications

1. Machine de moulage par injection, dans laquelle une unité de plastification, présentant un entraînement, montée par l'intermédiaire d'un récepteur sur un châssis de base peut être amenée en liaison, par adhérence, avec une plaque de serrage d'outil, la partie de boîtier, du côté de l'embouchure, de l'unité de plastification pouvant être déplacée, par un chariot reposant sur le châssis de base, sur une plaque de serrage d'outil vers et de celle-ci,
caractérisée en ce que le chariot (31) est déplaçable, par au moins une unité de déplacement (35) fixée sur la plaque de serrage d'outil (12), sur le châssis de base (11), en ce qu'au moins un évidement (34) est prévu sur la partie de chariot (32) à l'extrémité de tête, en ce que, dans cet évidement (34), il peut être disposé, mécaniquement, une culasse (29) prévue sur la partie de boitier (22) du côté de l'embouchure, et en ce que la partie de boîtier (23), du côté du pied, de l'unité de plastification (20) peut être reliée à un affût (40) déplaçable sur le châssis de base (11), par l'intermédiaire d'éléments de maintien et de centrage (24,25).

2. Machine de moulage par injection selon la revendication 1,
caractérisée en ce que l'unité de déplacement fixée sur la plaque de serrage d'outil (12) est un vérin (35) dont la tige de piston (36) est guidée par le chariot.

3. Machine de moulage par injection selon la revendication 1,
caractérisée en ce que l'évidement respectif (34) correspond, en ce qui concerne sa position, à un écartement prédéterminé de la culasse (29) par rapport à l'embouchure de boîtier (26) de l'unité de plastification (20).

4. Machine de moulage par injection selon la revendication 1,
caractérisée en ce que les éléments de maintien et de centrage (24,25) présentent, en longueur et diamètre, une forme qui, en compensant les différents diamètres externes du boîtier (21), relie de façon amovible la partie de boîtier à l'extrémité de pied (23) à l'affût (40).

5. Machine de moulage par injection selon la revendication 4,
caractérisée en que l'affût (40) est déplaçable horizontalement, sous une faible force, par l'intermédiaire d'éléments de glissement (43) sur le châssis de base (11).

6. Machine de moulage par injection selon la revendication 1,
caractérisée en ce que l'affût (40) présente des pièces pour recevoir l'entraînement à vis sans fin (41) pouvant être relié à l'unité de plastification (20).

7. Machine de moulage par injection selon la revendication 4,
caractérisée en ce que les éléments de maintien (24) sont constitués d'une bride agencée à l'extrémité du côté du pied de l'unité de plastification, qui est amenée en liaison, par des moyens d'écartement (37), par adhérence avec la culasse (29) de l'unité de plastification (20).

8. Machine de moulage par injection selon la revendication 7,
caractérisée en ce que les moyens d'écartement (37) sont constitués d'un entraînement linéaire, par exemple un vérin.
